(19) Europäisches Patentamt
European Patent Office
Office européen des brevets

(11) EP 4 618 197 A1

(12) EUROPEAN PATENT APPLICATION
published in accordance with Art. 153(4) EPC

(43) Date of publication:
**17.09.2025 Bulletin 2025/38**

(21) Application number: **23889126.1**

(22) Date of filing: **08.11.2023**

(51) International Patent Classification (IPC):
***H01M 4/62*** (2006.01) ***H01M 4/131*** (2010.01)
***H01M 10/052*** (2010.01) ***C08L 77/06*** (2006.01)
***C08G 69/42*** (2006.01) ***C08G 69/32*** (2006.01)
***H01M 4/02*** (2006.01)

(52) Cooperative Patent Classification (CPC):
**C08G 69/32; C08G 69/42; C08L 77/06; H01M 4/02; H01M 4/131; H01M 4/62; H01M 10/052;**
Y02E 60/10

(86) International application number:
**PCT/KR2023/017815**

(87) International publication number:
**WO 2024/101868 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.11.2022 KR 20220147607**

(71) Applicant: **Hansol Chemical Co., Ltd**
**Seoul 06169 (KR)**

(72) Inventors:
- **SEONG, Hoon-Moh**
  **Wanju-gun, Jeollabuk-do 55321 (KR)**
- **SONG, Shi-Jin**
  **Wanju-gun, Jeollabuk-do 55321 (KR)**
- **KIM, Kwang-In**
  **Wanju-gun, Jeollabuk-do 55321 (KR)**
- **HAN, Jae-Hee**
  **Wanju-gun, Jeollabuk-do 55321 (KR)**
- **KWON, Se-Man**
  **Wanju-gun, Jeollabuk-do 55321 (KR)**
- **KIM, Chang-Beom**
  **Wanju-gun, Jeollabuk-do 55321 (KR)**
- **KWAK, Gi-Seop**
  **Daegu 41566 (KR)**
- **KIM, Young-Rae**
  **Daegu 41566 (KR)**

(74) Representative: **Cabinet Chaillot**
**16/20, avenue de l'Agent Sarre**
**B.P. 74**
**92703 Colombes Cedex (FR)**

# (54) BINDER COMPRISING POLYAMIDE POLYMER, POSITIVE ELECTRODE FOR SECONDARY BATTERY COMPRISING BINDER, AND SECONDARY BATTERY COMPRISING POSITIVE ELECTRODE

(57) The present invention relates to: a binder comprising a polyamide polymer having a glass transition temperature of 100 °C to 250 °C; a positive electrode slurry comprising same; a positive electrode; and a secondary battery.

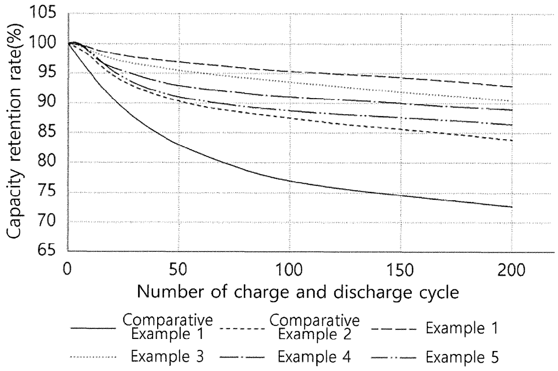


Figure 1

EP 4 618 197 A1

## Description

### Technical Field

The present disclosure relates to a binder for a positive electrode including a polyamide polymer, a slurry including the binder, an electrode, and a secondary battery.

### Background Art

Lithium secondary batteries have high energy density, so they are applied in a wide range of industrial fields, such as electrical, electronic, communication, and computer fields. Their application is expanding from small lithium secondary batteries for portable electronic devices to high-capacity secondary batteries for hybrid and electric vehicles.
In order to provide a lithium secondary battery with high energy density and excellent lifespan characteristics, it is desirable to increase the amounts of an electrode active material and a conductive agent and decrease the amount of a binder.
However, when the amount of the binder decreases, dispersibility and adhesiveness of the electrode active material and/or the conductive agent and flexibility of the electrode active material layer deteriorate decrease. Accordingly, during charging and discharging, the electrode active material may be separated from a current collector, resulting in deterioration in cycle characteristics.
Therefore, a binder capable of providing dispersibility of an electrode active material and/or a conductive agent, adhesiveness of an electrode plate, and flexibility of an electrode plate to an electrode even with a small amount of the binder is needed.
For example, a fluorine-based binder, such as polyvinylidene fluoride (PVDF) containing no polar group, undergoes less swelling in an organic electrolyte solution, and thus is useful in maintaining an electrode structure while operating a battery and may improve dispersibility of an active material.
However, PVDF has poor properties in terms of dispersibility of a conductive agent, adhesiveness of an electrode plate, and flexibility of an electrode plate. In particular, when PVDF is exposed to basic conditions for a long period of time, HF gas may be generated, causing the problem of deteriorating stability.
In addition, a non-fluorine-based binder, such as hydrogenated acrylonitrile-butadiene binder, has improved dispersibility of a conductive agent and flexibility of an electrode plate compared to the fluorine-based binder, but its adhesiveness is still poor.
Accordingly, there is a need for a binder capable of overcoming the problems of the related art, securing improved adhesiveness and flexibility at the same time, and providing excellent stability to improve lifespan characteristics of a lithium secondary battery.

[Documents of Related Art]

[Patent Documents]

(Patent Document 1) Korean Patent Application Publication No. 10-2016-0040125

### Disclosure

### Technical Problem

An objective of the present disclosure is to provide a binder for a positive electrode, the binder having improved adhesiveness characteristics and preventing detachment of an electrode caused by lithium ion migration, thereby improving electrochemical characteristics and cycle characteristics of a secondary battery.
A further objective of the present disclosure is to provide a binder for a positive electrode, the binder not generating harmful gases even after long-term exposure to bases, thereby improving stability and lifespan of a secondary battery.
A further objective of the present disclosure is to provide a slurry composition that improves characteristics of a secondary battery by using the binder for the positive electrode.
A further objective of the present disclosure is to provide a high-performance electrode (particularly, a positive electrode) to which the slurry composition is applied, and a low-cost and high-performance secondary battery including the electrode.
The objectives of the present disclosure are not limited to those mentioned above, and other objectives not mentioned will be clearly understood by those skilled in the art from the description provided hereinafter.

## Technical Solution

The present disclosure provides a binder for a positive electrode, the binder including a polyamide polymer having a glass transition temperature of 100°C to 250°C.

Another aspect of the present disclosure provides a positive electrode slurry, including:

the binder; and
a positive electrode active material.

Another aspect of the present disclosure provides a positive electrode, including:

a current collector; and
a positive electrode active material layer including the binder formed on the current collector.

Another aspect of the present disclosure provides

a secondary battery, including:
the positive electrode.

## Advantageous Effects

A binder for a positive electrode according to the present disclosure exhibits excellent adhesiveness characteristics, thereby improving electrochemical characteristics and cycle characteristics of a secondary battery.

In addition, the binder for the positive electrode according to the present disclosure does not generate harmful gases (e.g., hydrogen fluoride) even after long-term exposure to bases, thereby improving stability and lifespan of a secondary battery.

In addition, the improved adhesiveness of the binder for the positive electrode according to the present disclosure reduces the amount of the binder used while increasing the amounts of an active material and a conductive agent, thereby providing a lithium secondary battery with high energy density at low cost.

## Description of Drawings

FIG. 1 is a graph showing a cycle capacity retention rate of a cell manufactured according to Preparation Example 3 using a positive electrode plate to which polymer binders of Examples 1 and 3 to 5 and Comparative Examples 1 and 2 are applied.

## Best Mode

Hereinafter, the operation and effect of the present disclosure will be described in more detail through specific embodiments of the present disclosure. However, these embodiments are provided only for illustrative purposes and not intended for limiting the scope of the present disclosure.

All terms or words used in the specification and claims have the same meaning as commonly understood by one of ordinary skill in the art to which inventive concepts belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Therefore, embodiments disclosed herein are merely preferred examples of the present disclosure and do not fully describe the technical idea of the present disclosure, so it will be appreciated that there can be various equivalents and alterations thereto at a filing date of the present application.

As used herein, the singular forms are intended to include the plural forms as well, unless the context clearly indicates otherwise. It will be further understood that the terms "comprise", "include", "have", etc., when used in this specification, specify the presence of stated features, integers, steps, operations, elements, components, and/or combinations thereof but do not preclude the presence or addition of one or more other features, integers, steps, operations, elements, components, and/or combinations thereof.

In this specification, "a to b" and "a~b" indicating a numerical range are defined as $\geq$ a and $\leq$ b.

A binder for a positive electrode according to one aspect of the present disclosure may include a polyamide polymer having a glass transition temperature of 100°C to 250°C.

The glass transition temperature may be, for example, 150°C to 200°C, 150°C to 180°C, or equal to or greater

than 150°C. In addition, the glass transition temperature may be equal to or less than 170°C.

When the glass transition temperature of the polyamide polymer falls below the above range, high temperature and thermal stability of a secondary battery may deteriorate.

In addition, when the glass transition temperature of the polyamide polymer exceeds the above range, it exhibits brittle characteristics, which may result in deterioration in binding characteristics and adhesiveness to a current collector (e.g., an aluminum current collector).

In an embodiment, the polyamide polymer may include a monomer unit including at least one aromatic ring.

In particular, the aromatic ring may be used to form a part of a backbone of the polyamide polymer. That is, the polyamide polymer may include the aromatic ring in the backbone.

Meanwhile, the polyamide polymer may not include an aliphatic ring or an aliphatic chain structure in the backbone (it may include an aliphatic ring or an aliphatic chain structure as a terminal group other than the backbone).

When a polyamide polymer includes an aliphatic ring or aliphatic chain structure in the backbone, an electrode expansion suppression effect may be low compared to a polyamide polymer including a monomer unit including at least an aromatic ring, precipitation caused by reduced solubility may occur, and electric resistance of a battery may increase, making it difficult to use as a binder.

A binder for an electrode in which the polyamide polymer including the monomer unit including the at least one aromatic ring is included may have improved electrolyte solution stability since it swells less in an electrolyte solution compared to a binder for an electrode in which a conventional PVDF-based polymer is included. Thus, volume expansion of a cell may also be reduced, thereby improving stability and lifespan of a battery.

In an embodiment, the binder may not include a fluorine atom, and may not generate hydrogen fluoride during charging and discharging of a battery in which the binder is used.

On the contrary, a currently commercialized PVDF binder includes a fluorine atom and has the problem of generating hydrogen fluoride during charging and discharging of a battery.

In an embodiment, the polyamide polymer may further include a monomer unit including sulfone.

The monomer unit including the sulfone may also include an aromatic ring. The sulfone and/or the aromatic ring of the monomer unit including the sulfone may be used to form a part of the backbone of the polyamide polymer. That is, the polyamide polymer may include the sulfone in the backbone.

The monomer unit including the sulfone may contribute to improving adhesiveness characteristics of the polyamide polymer. In addition, it may greatly contribute to improving the characteristics of a battery. This is because the improved adhesiveness characteristics of the polyamide polymer prevent detachment of an electrode during charging and discharging of a battery, thereby maintaining lifespan of the battery, and at the same time a sulfone group of the polyamide polymer forms a passivation layer (stable protective layer) on the surface of a positive electrode surface of the battery, thereby improving charge/discharge characteristics of the battery.

In addition, the monomer unit including the sulfone may also contribute to improving initial efficiency of a battery.

In an embodiment, the at least one aromatic ring of the polyamide polymer may be substituted with a halogen element, hydrogen, a hydroxyl group, a carboxyl group, a straight or branched hydrocarbon group having 1 to 4 carbon atoms substituted or unsubstituted with a halogen element, or a combination thereof.

However, the halogen element may not include fluorine. For example, the halogen element may be Cl or Br.

Meanwhile, the at least one aromatic ring of the polyamide polymer may not include any substituent (i.e., it may be substituted only with hydrogen).

In an embodiment, a monomer that forms the monomer unit including the at least one aromatic ring through polymerization may include any one or more selected from the group consisting of a diamine monomer including at least one aromatic ring, a terephthaloyl chloride monomer, an isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

In an embodiment, the diamine monomer including the at least one aromatic ring may be any one or more selected from the group consisting of p-phenylenediamine, m-phenylenediamine, 3,3'-dimethylbenzidine, 2,2'-dimethylbenzidine, tetrachlorobenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, and bis[4-(4-aminophenoxy)phenyl]ether.

In an embodiment, a monomer that forms the monomer unit including the sulfone through polymerization may be any one or more selected from the group consisting of bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

In particular, when bis(4-aminophenyl)sulfone is used, adhesiveness characteristics of the polyamide polymer may be significantly improved. In addition, it may greatly contribute to improving characteristics of a battery using a positive

electrode to which bis(4-aminophenyl)sulfone is applied (e.g., initial efficiency characteristics, cycle capacity retention characteristics, and the like of a battery).

In an embodiment, the polyamide polymer included in the binder according to the present disclosure may include a monomer repeating unit represented by Formula 1 below.

[Formula 1]

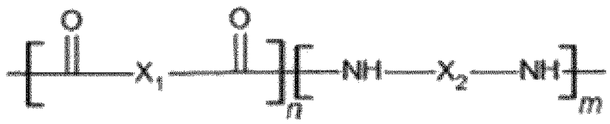

In Formula 1 above,

$X_1$ includes at least one aromatic ring substituted with hydrogen, a hydroxyl group, a carboxyl group, a straight or branched hydrocarbon group having 1 to 4 carbon atoms, or a combination thereof, and
$X_2$ includes two or more aromatic rings substituted with hydrogen, a hydroxyl group, a carboxyl group, a linear or branched hydrocarbon group having 1 to 4 carbon atoms, or a combination thereof, and
n+m=1.

In Formula 1 above, n and m represent mole fractions.

In Formula 1 above, the halogen element may not include fluorine.

In an embodiment, $X_2$ in Formula 1 above may be two aromatic rings substituted with hydrogen, a hydroxyl group, a carboxyl group, a straight or branched hydrocarbon group having 1 to 4 carbon atoms, or a combination thereof, which are connected to each other by a simple bond, $-CH_2-$, $-C(CH_3)_2-$, -C(=O)-, -S(=O)-, -O-, or $-SO_2-$; or naphthalene substituted with hydrogen, a hydroxyl group, a carboxyl group, a straight or branched hydrocarbon group having 1 to 4 carbon atoms, or a combination thereof.

In an embodiment, the polyamide polymer may include a monomer repeating unit represented by Formula 2 below.

[Formula 2]

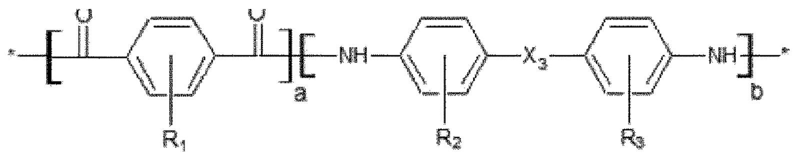

(1) (2)

In Formula 2 above,

$X_3$ is a simple bond, $-CH_2-$, $-C(CH_3)_2-$, -C(=O)-, -S(=O)-, -O-, or $-SO_2-$,
$R_1$ to $R_3$ are each independently hydrogen, a hydroxyl group, a carboxyl group, a straight or branched hydrocarbon group having 1 to 4 carbon atoms, or a combination thereof, and
a+b=1.

In Formula 2 above, a and b represent mole fractions.

In Formula 2 above, the halogen element may not include fluorine.

For example, the hydrocarbon having 1 to 4 carbon atoms in $R_1$ to $R_3$ in Formula 2 above may be methyl, ethyl, n-propyl, iso-propyl, n-butyl, iso-butyl, sec-butyl, or tert-butyl.

Meanwhile, the simple bond in Formulae 1 and 2 above may mean a bond in which an aromatic ring and an aromatic ring are directly connected without other atoms.

The monomer unit corresponding to (1) of Formula 2 above corresponds to a monomer unit including at least one aromatic ring.

For example, a monomer that forms the monomer unit corresponding to (1) of Formula 2 above through polymerization may be any one or more selected from the group consisting of a terephthaloyl chloride monomer, an

isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

In addition, a monomer that forms the monomer unit corresponding to (2) of Formula 2 above through polymerization may be a diamine monomer that does not include sulfone and includes at least one aromatic ring, a diamine monomer that includes sulfone and at least one aromatic ring, or a combination thereof.

For example, the monomer that forms the monomer unit corresponding to (2) of Formula 2 above through polymerization may be any one or more selected from the group consisting of p-phenylenediamine, m-phenylenediamine, 3,3'-dimethylbenzidine, 2,2'-dimethylbenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, bis[4-(4-aminophenoxy)phenyl]ether, bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

In an embodiment, the polyamide polymer may have a weight average molecular weight of 100,000 to 1,000,000.

Within the range of the weight average molecular weight of the polyamide polymer according to the present disclosure, as the weight average molecular weight increases, adhesiveness of the polyamide polymer may increase.

When the weight average molecular weight of the polyamide polymer is less than 100,000, electrolyte solution stability of an electrode binder including the polyamide polymer may deteriorate. In addition, stability of an electrode slurry including a binder including the polyamide polymer may deteriorate.

On the other hand, when the weight average molecular weight of the polyamide polymer exceeds 1,000,000, viscosity may increase during slurry preparation, making slurry coating difficult.

In an embodiment, a molar ratio of terephthaloyl chloride to isophthaloyl chloride (mol% of terephthaloyl chloride: mol% of isophthaloyl chloride) used in polymerization of the polyamide polymer may be 2:8 to 8:2.

For example, the molar ratio of terephthaloyl chloride to isophthaloyl chloride may be 3:7 to 7:3.

That is, for polymerization of the polyamide polymer included in the binder for the positive electrode according to the present disclosure, both terephthaloyl chloride and isophthaloyl chloride may be used.

A positive electrode slurry according to another aspect of the present disclosure may include the binder for the positive electrode according to the present disclosure and a positive electrode active material.

A positive electrode slurry according to another aspect of the present disclosure may include the binder and a positive electrode active material.

As the positive electrode active material for forming an electrode used in the present disclosure, any positive electrode active material that is available in the relevant technical field may be used. Specific examples of the positive electrode active material may include, but are not limited thereto: lithium metal; a lithium-cobalt-based oxide such as $LiCoO_2$; a lithium-manganese-based oxide such as $Li_{1+x}Mn_{2-x}O_4$ (wherein, x is 0 to 0.33), $LiMnO_3$, $LiMn_2O_3$, and $LiMnO_2$; a lithium-copper-based oxide such as $Li_2CuO_2$; a vanadium oxide such as $LiV_3O_8$, $V_2O_5$, and $Cu_2V_2O_7$; a lithium-nickel-based oxide expressed as $LiNi_{1-x}M_xO_2$ (wherein, M=Co, Mn, Al, Cu, Fe, Mg, B, or Ga and x=0.01 to 0.3); a lithium manganese composite oxide expressed as $LiMn_{2-x}M_xO_2$ (wherein, M=Co, Ni, Fe, Cr, Zn, or Ta, and x=0.01 to 0.1) or $Li_2Mn_3MO_8$ (wherein, M=Fe, Co, Ni, Cu, or Zn); a lithium-nickel-manganese-cobalt-based oxide expressed as $Li(Ni_aCo_bMn_c)O_2$ (wherein, $0 < a < 1$, $0 < b < 1$, $0 < c < 1$, a+b+c=1); a sulfur or disulfide compound; a phosphate such as $LiFePO_4$, $LiMnPO_4$, $LiCoPO_4$, and $LiNiPO_4$; and $Fe_2(MoO_4)_3$.

Here, the positive electrode active material layer may further include a dispersant, a conductive agent, a filler, and other additives in addition to the positive electrode active material.

The positive electrode active material may be included in an amount of 90 wt% to 99 wt% in terms of solid content. When the amount of the active material is low, a battery may not provide high capacity. When the amount of the active material is too high, the amounts of a binder, a conductive agent, and the like may be relatively low, leading to deterioration in electrode adhesiveness, conductivity, and the like.

The conductive agent is not particularly limited and may be appropriately selected depending on the type of battery or capacitor. For example, in the case of a lithium-ion secondary battery, carbon such as graphite and activated carbon may be used, and in the case of a nickel-hydrogen secondary battery, cobalt oxide may be used, and nickel powder, cobalt oxide, titanium oxide, carbon, and the like may be used for a negative electrode.

Examples of the carbon may include acetylene black, furnace black, graphite, carbon fiber, fullerenes, and carbon nanotubes.

The amount of the conductive agent used is usually 1 to 20 parts by weight, preferably 2 to 10 parts by weight, with respect to 100 parts by weight of an electrode active material.

As the amount of the conductive agent decreases and the amount of the positive electrode active material increases, energy density of a secondary battery may be improved. Therefore, it is important to achieve high efficiency

even when using the same amount of the conductive agent.

A conductive agent used in an electrode slurry for a secondary battery has higher conductive efficiency as it is dispersed more uniformly in a smaller size, thereby lowering resistance within a battery, improving output characteristics, and improving lifespan characteristics. When the conductive agent is dispersed unevenly in a large size, adhesiveness characteristics and conductivity may decrease even when it is used in the same amount, which may have a negative effect on lifespan characteristics and output characteristics of a battery. In addition, when a dispersion has a low viscosity, a solid content of slurry may be increased to improve electrode production speed.

In addition to the binder for the positive electrode including the polyamide polymer including the monomer unit including the aromatic ring according to the present disclosure, as a binder for a positive electrode of a secondary battery, any one selected from the group consisting of poly(meth)acrylic acid, poly(meth)acrylamide, carboxymethyl cellulose, polyvinylidene fluoride, a polyhexafluoropropylene-polyvinylidene fluoride copolymer (P(VdF/HFP)), poly(vinyl acetate), polyvinyl alcohol, polyethylene oxide, polyvinylpyrrolidone, alkylated polyethylene oxide, polyvinyl ether, poly(methyl methacrylate), poly(ethyl acrylate), polytetrafluoroethylene, polyvinyl chloride, polyacrylonitrile, polyvinylpyridine, styrene-butadiene rubber, acrylonitrile-butadiene rubber, and copolymers thereof, or a mixture of two or more thereof may be used.

The amount of the binder in the positive electrode slurry composition is preferably 0.3 wt% to 10 wt% in terms of solid content, and more preferably 0.7 wt% to 8 wt%. When the amount is less than 0.3 wt%, it may be difficult to achieve sufficient adhesiveness within a current collector and an electrode composition. When the amount exceeds 10 wt%, a binder ratio within an electrode slurry composition may increase, resulting in a reduction in battery capacity.

A positive electrode according to another aspect of the present disclosure may include a current collector; and a positive active material layer including the binder for the positive electrode according to the present disclosure formed on the current collector.

The positive electrode may be manufactured through the steps of (a) preparing a composition for forming a positive electrode active material layer including a positive electrode active material and the binder according to the present disclosure, and (b) applying the composition for forming the positive electrode active material layer onto a positive electrode current collector and then drying the composition.

The composition for forming the positive electrode active material layer may be stirred by a conventional method using a conventional mixer, such as a high-shear mixer and a homo mixer.

Step (b) is a step of manufacturing a positive electrode for a lithium secondary battery by applying the composition for forming the positive electrode active material layer prepared in step (a) onto the positive electrode current collector and then drying the composition.

Here, the method of applying the composition for forming the positive electrode active material layer in the form of slurry is not limited, and examples thereof may include doctor blade coating, dip coating, gravure coating, slit die coating, spin coating, comma coating, bar coating, reverse roll coating, screen coating, and cap coating.

After coating, drying may be performed to finally manufacture a positive electrode for a secondary battery (particularly, a lithium secondary battery) in which a positive electrode active material layer is formed.

The current collector may be used as long as it has conductivity and does not chemically react with a slurry for forming an electrode. Representative examples thereof may include aluminum foil and copper foil. A current collector having a thickness of 3 to 50 micrometers may be selected and used.

A secondary battery according to another aspect of the present disclosure may include the positive electrode.

Meanwhile, a secondary battery including a positive electrode including the binder for the positive electrode according to the present disclosure, a negative electrode, a separator, and an electrolyte solution may be manufactured.

The separator needs to be an insulator that can separate the negative electrode and the positive electrode, and needs to provide a passage through which only lithium ions can migrate. To this end, the separator needs to have good impregnating ability to the electrolyte solution, and a porous polymer film such as PE/PP and porous non-woven fabric may be used. To prevent a battery short-circuit, a coated separator coated with ceramics or other materials that enhance heat resistance and mechanical strength may be used, and may be coated in a single layer or multiple layers.

The separator may be formed of a porous substrate. As the porous substrate, any porous substrate commonly used in electrochemical devices may be used. For example, a polyolefin-based porous membrane or a non-woven fabric may be used, but is not particularly limited thereto.

The separator may be a porous substrate made of any one selected from the group consisting of polyethylene, polypropylene, polybutylene, polypentene, polyethylene terephthalate, polybutylene terephthalate, polyester, polyacetal, polyamide, polycarbonate, polyimide, polyetheretherketone, polyethersulfone, polyphenylene oxide, polyphenylene sulfide, and polyethylene naphthalate, or a mixture of two or more thereof.

The electrolyte solution of the lithium secondary battery is a non-aqueous electrolyte solution containing a lithium salt, and is composed of a lithium salt and a solvent. As the solvent, a non-aqueous organic solvent, an organic solid electrolyte, and an inorganic solid electrolyte may be used.

The lithium salt is a substance that is easily dissolved in the non-aqueous electrolyte solution. Examples thereof

may include LiCl, LiBr, LiI, $LiClO_4$, $LiBF_4$, $LiB_{10}Cl_{10}$, $LiPF_6$, $LiAsF_6$, $LiSbF_6$, LiAlCl , LiSCN, $LiC_4BO_8$, $LiCF_3CO_2$, $LiCH_3SO_3$, $LiCF_3SO_3$, $LiN(SO_2CF_3)_2$, $LiN(SO_2F)_2$, $LiN(SO_2C_2F_5)_2$, $LiC_4F_9SO_3$, $LiC(CF_3SO_2)_3$, $(CF_3SO_2)_2NLi$, lithium chloroborate, lower aliphatic lithium carbonate, lithium tetraphenyl borate, and imide.

The non-aqueous organic solvent may be a non-aprotic organic solvent, and examples thereof may include, N-methyl-2-pyrrolidone, propylene carbonate, ethylene carbonate, butylene carbonate, dimethyl carbonate, diethyl carbonate, ethylmethyl carbonate, gamma-butyrolactone, 1,2-dimethoxy ethane, 1,2-diethoxy ethane, tetrahydroxy franc, 2-methyltetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxymethane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Examples of the organic solid electrolyte may include polyethylene derivatives, polyethylene oxide derivatives, polypropylene oxide derivatives, phosphate ester polymers, poly algitation lysine, polyester sulfide, polyvinyl alcohol, polyvinylidene fluoride, and polymers including ionic dissociation groups.

Examples of the inorganic solid electrolyte may include nitrides, halides, and sulfates of lithium such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH, and $Li_3PO_4$-$Li_2S$-$SiS_2$.

In addition, in the non-aqueous electrolyte solution, other additives may be further added for the purpose of improving charge/discharge characteristics, flame retardancy, and the like. Examples of the additives may include pyridine, triethylphosphite, triethanolamine, cyclic ether, ethylenediamine, n-glyme, hexaphosphate triamide, nitrobenzene derivatives, sulfur, quinone imine dye, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), and vinylene carbonate (VC).

The lithium secondary battery according to the present disclosure may be subjected to not only a conventional winding process but also a lamination stack/folding process of a separator and electrodes. In addition, a casing of the battery may be cylindrical, rectangular, pouch-shaped, or coin-shaped.

## Mode for Invention

Hereinafter, the present disclosure will be described in more detail through examples, but the present disclosure is not limited to these examples.

### Preparation Example 1. Preparation of Polymer for Binder

[Example 1]

In a 500 ml four-necked flask under a nitrogen atmosphere, N-methyl-2-pyrrolidone (NMP) and bis(4-aminophenyl)sulfone (p-APS), which is a monomer that forms a monomer unit including sulfone, were added and stirred.

After lowering the temperature inside a reactor to equal to or less than 5°C, isophthaloyl chloride (IPC), which is a monomer unit including an aromatic ring, was added and reacted.

Terephthaloyl chloride (TPC), which is a monomer that forms a monomer unit including an aromatic ring, was added thereto and stirred for a sufficient time.

A molar ratio of the isophthaloyl chloride and the terephthaloyl chloride was 5:5.

An olefin-based neutralizing agent was added to the solution whose viscosity had risen to a predetermined level and stirred to remove HCl generated during synthesis.

Finally, a polyamide copolymer solution for a binder was prepared with a solid concentration of 15 wt% (weight average molecular weight of approximately 226,193 g/mol).

[Example 2]

A polyamide copolymer solution for a binder was prepared in the same manner as in Example 1, except that a solid concentration was changed to 10 wt%.

[Example 3]

A polyamide copolymer solution for a binder was prepared in the same manner as in Example 1, except that a solid concentration was changed to 20 wt%.

[Example 4]

A polyamide copolymer solution for a binder was prepared in the same manner as in Example 1, except that 1 mol of bis(3-aminophenyl)sulfone (m-APS) was used instead of 1 mol of bis(4-aminophenyl)sulfone (p-APS).

[Example 5]

A polyamide copolymer solution for a binder was prepared in the same manner as in Example 1, except that 1 mol of 4,4'-oxydianiline (ODA) was used instead of 1 mol of bis(4-aminophenyl)sulfone (p-APS).

[Comparative Example 1]

A 500 mL double jacket reactor equipped with a stirrer, a nitrogen injection device, and a condenser was purged with nitrogen.
Bis(4-aminophenyl)sulfone and N-methyl-2-Pyrrolidone (NMP), which are monomers that form monomer units including sulfone, were added and stirred at room temperature until dissolved.
Afterwards, 4,4-oxydiphthalic anhydride (ODPA) was added as a dianhydride monomer, and stirred for equal to or greater than 24 hours. Pyridine was additionally added as a dehydration catalyst and reacted to prepare a polyimide polymer solution for a binder, with a solid concentration of 15 wt%.

[Comparative Example 2]

KF7208 PVDF polymer solution from KUREHA was purchased and used as a polymer solution for a binder.
Each of the polymer solutions for the binders of Examples 1 and 5 and Comparative Examples 1 and 2 was coated on a glass plate and dried under cyclical vacuum to produce a film. A glass transition temperature (Tg) of the polymers for the binders was measured by DMA analysis using DMA 1 from Mettler (analysis conditions: - 50°C to 400°C, 5°C /min), and the results are shown in Table 1 below.

Table 1

| | Monomer composition | Tg (°C) |
|---|---|---|
| Example 1 | p-APS / TPC / IPC | 161 |
| Example 5 | ODA / TPC / IPC | 152 |
| Comparative Example 1 | p-APS / ODPA | 278 |
| Comparative Example 2 | PVDF (Kureha) | -43 |

As shown in Table 1 above, the PVDF polymer for the binder of Comparative Example 2 had a glass transition temperature of -43°C.
In addition, the polyimide polymer for the binder of Comparative Example 1 had an aromatic ring and a rigid imide structure, and thus had a very high glass transition temperature of 278°C.
Meanwhile, it was confirmed that the polyimide polymers for the binders of Examples 1 and 5 had an aromatic ring and an amide structure, and thus had glass transition temperatures of 161°C and 152°C, respectively, i.e., glass transition temperatures in the range of 100°C to 250°C.

**Preparation Example 2. Preparation of Positive Electrode Slurry and Positive Electrode**

A positive electrode active material slurry composition was prepared by mixing 55 wt% to 60 wt% of NCM622 as an electrode active material, 1.5 wt% to 2 wt% of each polymer for a binder of Examples 1 to 5 and Comparative Examples 1 and 2, 0.7 to 0.8 wt% of a CNT dispersion, and a remainder of NMP.
The prepared positive electrode slurry composition was coated on an aluminum (Al) foil, which is a positive electrode collector with a thickness of 20 μm, using an applicator, and dried in a 130°C convection oven for 1 hour. The dried positive electrode was then rolled using a roll press to manufacture a positive electrode.
The manufactured positive electrode was dried at 130°C for 1 hour and then cut into a size of 15 cmx2.5 cm.
Afterwards, a surface coated with the positive electrode slurry was adhered to an acrylic plate with double-sided tape attached, and pressed 3 to 4 times with a rubber roller for pressing to prepare a peel-off test sample.
The prepared sample was loaded into a UTM for measuring adhesiveness, and subjected to a 2.5 cm 180° peel

test. A loading value (N/mm) was measured to calculate adhesiveness of the positive electrode.

The calculated adhesiveness values of the positive electrode are shown in Table 2 below.

Table 2

| Polymer for binder | Monomer composition | Positive electrode adhesiveness (gf/2.5 mm) |
|---|---|---|
| Example 1 | p-APS / TPC / IPC | 26.84 |
| Example 2 | p-APS / TPC / IPC | 18.21 |
| Example 3 | p-APS / TPC / IPC | 22.54 |
| Example 4 | m-APS / TPC / IPC | 2.55 |
| Example 5 | ODA / TPC / IPC | 17.25 |
| Comparative Example 1 | p-APS / ODPA | 0.41 |
| Comparative Example 2 | PVDF (Kureha) | 18.88 |

As shown in Table 2 above, it was confirmed that the positive electrodes to which the polyamide binders of Examples 1 to 5 were applied had higher adhesiveness compared to the positive electrode manufactured using the polyimide polymer binder of Comparative Example 1.

In particular, the polyamide polymer binders of Examples 1 and 3 including p-APS as a monomer exhibited higher adhesiveness compared to the PVDF polymer binder of Comparative Example 2.

In addition, as a result of comparing the polyamide polymer binders of Examples 2 and 3, which were prepared with the same composition ratio but different in solid content, it was confirmed that the adhesiveness increased as the solid content increased.

**Preparation Example 3. Manufacture of Cell**

A non-aqueous electrolyte containing 1.5 M of $LiPF_6$ and 20 wt% of FEC was used as an electrolyte. A polyolefin separator was interposed between a positive electrode, which prepared according to Preparation Example 2 using a positive electrode plate using each polymer binder of Examples 1 to 5 and Comparative Examples 1 and 2, and a negative electrode, and a lithium secondary battery was manufactured as a 2032 coin cell type or a pouch type without distinction of form.

Cells manufactured according to Preparation Example 3 using the positive electrode plates using the polymer binders of Examples 1 and 3 to 5 and Comparative Examples 1 and 2 were charged to 4.2 V at a 0.1 C rate in a CC/CV mode and discharged to 2.5 V at a 0.1 C rate, then charged to 4.2 V at a 0.2 C rate and discharged to 2.5 V at a 0.2 C rate, and then charged to 4.2 V at a 0.5 C rate and discharged to 2.5 V at a 0.5 C rate (initial formation). At this time, a temperature in a chamber was 25°C. The "C" refers to a discharge rate of a cell, and is a value obtained by dividing the total capacity of the cell by the total discharge time.

An initial charge capacity, initial discharge capacity, initial efficiency, and DC-IR of the cells manufactured according to Preparation Example 3 using the positive electrode plates using the polymer binders of Examples 1 and 3 to 5 and Comparative Examples 1 and 2 were measured, and the results are shown in Table 3 below.

During initial formation, a charge capacity during charging at a 0.1C rate up to 4.2 V and a discharge capacity during discharging at a 0.1C rate up to 2.5 V were measured as the initial charge capacity and the initial discharge capacity, respectively, and the initial efficiency was calculated using Equation 1 below.

[Equation 1]

$$\text{Initial efficiency [\%]} = [\text{initial discharge capacity / initial charge capacity}] \times 100$$

Meanwhile, the DC-IR was measured under the conditions of charging at a 0.3C rate to a voltage corresponding to 50% of SOC and discharging at a 2C rate to 2.75 V in the CC/CV mode after initial formation of the cells manufactured according to Preparation Example 3 using the positive electrode plates using the polymer binders of Examples 1 and 3 to 5 and Comparative Examples 1 and 3. At this time, a temperature in a chamber was 25°C.

Table 3

| Used polymer binder | Initial charge capacity (mAh/g) | Initial discharge capacity (mAh/g) | Initial efficiency (%) | DC-IR (ohm) |
|---|---|---|---|---|
| Example 1 | 183.50 | 158.36 | 86.30 | 0.1067 |
| Example 3 | 185.36 | 159.74 | 86.18 | 0.1094 |
| Example 4 | 184.22 | 156.69 | 85.06 | 0.1055 |
| Example 5 | 182.14 | 152.30 | 83.62 | 0.1075 |
| Comparative Example 1 | 178.65 | 148.22 | 82.97 | 0.1157 |
| Comparative Example 2 | 186.38 | 159.46 | 85.55 | 0.1163 |

As a result of measuring the initial efficiency, the cells manufactured according to Preparation Example 3 using the positive electrode plates using the polymer binders of Examples 1 and 3 to 5 all exhibited an initial efficiency of equal to or greater than 83%.

In particular, when the polyamide binders using a p-APS monomer (Examples 1 and 3) were applied, a relatively high initial efficiency of equal to or greater than 86% was shown.

As a result of measuring the DC-IR to determine electrical resistance characteristics of a battery, the cells manufactured according to Preparation Example 3 using the positive electrode plates using the polymer binders of Examples 1 and 3 to 5 all exhibited a DC-IR of equal to or less than 0.1120 Ω.

This DC-IR value was lower than that of the cells to which the polymer binders of Comparative Examples 1 and 2 were applied, indicating that the cells to which the polymer binders of Examples 1 and 3 to 5 were applied had relatively low resistance characteristics.

Such low resistance characteristics contribute to active migration of electrons between positive and negative electrodes within a battery, thereby contributing to excellent battery characteristics.

After initial formation of the cells manufactured according to Preparation Example 3 using the positive electrode plates using the polymer binders of Examples 1 and 3 to 5 and Comparative Examples 1 and 2, a cycle of charging at a 1C rate to 4.2 V in the CC/CV mode and discharging at a 1C rate to 2.5 V was repeated 200 times.

A discharge capacity during discharging of a 1st cycle, a discharge capacity at discharging of a 100th cycle, and a discharge capacity during discharging of the 200th cycle were measured, and a 100th cycle capacity retention rate and a 200th cycle capacity retention rate were calculated using Equations 2 and 3 below.

100th cycle capacity retention rate [%] = [100th cycle discharge capacity / 1st cycle discharge capacity] x 100 [Equation 2]

200th cycle capacity retention rate [%] = [200th cycle discharge capacity / 1st cycle discharge capacity] x 100 [Equation 3]

The calculated 100th cycle capacity retention rate and 200th cycle capacity retention rate values are shown in Table 4 below.

Table 4

| Used polymer binder | 100th cycle capacity retention rate (%) | 200th cycle capacity retention rate (%) |
|---|---|---|
| Example 1 | 95.43 | 92.95 |
| Example 3 | 93.46 | 90.45 |
| Example 4 | 91.12 | 88.86 |
| Example 5 | 88.61 | 86.49 |
| Comparative Example 1 | 76.68 | 72.48 |
| Comparative Example 2 | 87.32 | 83.81 |

The calculated capacity retention rate values showed a similar trend to the initial efficiency values.

That is, as shown in FIG. 1, the cells manufactured according to Preparation Example 3 using the positive

electrode plates using the polymer binders of Examples 1 and 3 to 5 all exhibited a 100th cycle capacity retention rate of equal to or greater than 88% and a 200th cycle capacity retention rate of equal to or greater than 86%, showing superior cycle capacity retention rate characteristics compared to the cells manufactured according to Preparation Example 3 using the positive electrode plates using the polymer binders of Comparative Examples 1 and 2.

In particular, when the polyamide binders using a p-APS monomer (Examples 1 and 3) were applied, a relatively high cycle capacity retention rate was exhibited, and when the polyamide binder of Example 1, which had excellent positive electrode adhesiveness, was applied, the highest cycle capacity retention rate was exhibited.

As a result, it was confirmed that the binder for the positive electrode according to the present disclosure including the polyamide polymer had excellent adhesiveness characteristics due to its excellent glass transition temperature characteristics.

In addition, it was confirmed that when the binder for the positive electrode including the polyamide polymer according to the present disclosure was applied, the characteristics of a secondary battery were improved.

The scope of the present disclosure is defined by the accompanying claims rather than the description which is presented above, and all of changes and modifications obtained from the meaning and range of claims and equivalent concepts should be construed as being included in the scope of the present disclosure.

## Industrial Applicability

A binder for a positive electrode according to the present disclosure exhibits excellent adhesiveness characteristics, thereby improving electrochemical characteristics and cycle characteristics of a secondary battery.

In addition, the binder for the positive electrode according to the present disclosure does not generate harmful gases (e.g., hydrogen fluoride) even after long-term exposure to bases, thereby improving stability and lifespan of a secondary battery.

In addition, the improved adhesiveness of the binder for the positive electrode according to the present disclosure reduces the amount of the binder used while increasing the amounts of an active material and a conductive agent, thereby providing a lithium secondary battery with high energy density at low cost.

## Claims

1. A binder for a positive electrode, the binder comprising:
   a polyamide polymer having a glass transition temperature of 100°C to 250°C.

2. The binder of claim 1, wherein the binder does not include a fluorine atom, and does not generate hydrogen fluoride during charging and discharging of a battery in which the binder is used.

3. The binder of claim 1, wherein the polyamide polymer includes a monomer unit including at least one aromatic ring.

4. The binder of claim 3, wherein the polyamide polymer further includes a monomer unit including sulfone.

5. The binder of claim 2, wherein the at least one aromatic ring of the polyamide polymer is substituted with a halogen element, hydrogen, a hydroxyl group, a carboxyl group, a straight or branched hydrocarbon group having 1 to 4 carbon atoms substituted or unsubstituted with a halogen element, or a combination thereof (however, the halogen element does not include fluorine).

6. The binder of claim 2, wherein a monomer that forms the monomer unit including the at least one aromatic ring through polymerization includes any one or more selected from the group consisting of a diamine monomer including at least one aromatic ring, a terephthaloyl chloride monomer, an isophthaloyl chloride monomer, a phthalic acid monomer, an isophthalic acid monomer, a terephthalic acid monomer, a 4,4'-dibenzoic acid monomer, and a 4,4'-dicarboxydiphenyl sulfone monomer.

7. The binder of claim 6, wherein the diamine monomer including the at least one aromatic ring is any one or more selected from the group consisting of p-phenylenediamine, m-phenylenediamine, 3,3'-dimethylbenzidine, 2,2'-dimethylbenzidine, tetrachlorobenzidine, 2,4-diaminotoludine, 2,6-diaminotoludine, 3,5-diaminobenzoic acid, bis(4-aminophenyl)methane, 4,4'-oxydianiline, 3,4'-diaminodiphenyl ether, 2,2-bis(4-aminophenyl)propane, bis(4-aminophenyl)terephthalate, 4,4'-diaminodiphenylmethane, 4,4'-methylene-bis(2-methylaniline), 4,4'-diaminobenzophenone, bis(4-aminophenyl)methane, and bis[4-(4-aminophenoxy)phenyl]ether.

**8.** The binder of claim 4, wherein a monomer that forms the monomer unit including the sulfone through polymerization is any one or more selected from the group consisting of bis(4-aminophenyl)sulfone, bis(3-aminophenyl)sulfone, 3,3'-diaminophenyl sulfone, 3,4'-diaminophenyl sulfone, 4,4'-diaminophenyl sulfone, 1,3-bis(3-aminophenyl sulfone), 1,3-bis(4-aminophenyl sulfone), 1,4-bis(4-aminophenyl sulfone), bis [3-(3-aminophenoxy)phenyl] sulfone, bis [3-(4-aminophenoxy)phenyl] sulfone, bis [4-(3-aminophenoxy)phenyl] sulfone, and bis [4-(4-aminophenoxy)phenyl] sulfone.

**9.** The binder of claim 1, wherein the polyamide polymer includes a monomer repeating unit represented by Formula 1 below,

[Formula 1]

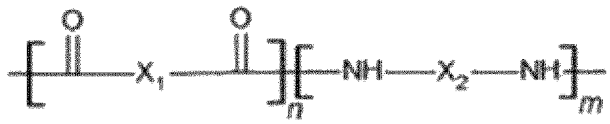

wherein, in Formula 1 above,

$X_1$ includes at least one aromatic ring substituted with a halogen element, hydrogen, a hydroxyl group, a carboxyl group, a straight or branched hydrocarbon group having 1 to 4 carbon atoms substituted or unsubstituted with a halogen element, or a combination thereof,
$X_2$ includes two or more aromatic rings substituted with a halogen element, hydrogen, a hydroxyl group, a carboxyl group, a linear or branched hydrocarbon group having 1 to 4 carbon atoms substituted or unsubstituted with a halogen element, or a combination thereof, and

$$n+m=1$$

(however, the halogen element in Formula 1 above does not include fluorine).

**10.** The binder of claim 9, wherein $X_2$ in Formula 1 above is two aromatic rings substituted with a halogen element, hydrogen, a hydroxyl group, a carboxyl group, a straight or branched hydrocarbon group having 1 to 4 carbon atoms substituted or unsubstituted with a halogen element, or a combination thereof, which are connected to each other by a simple bond, $-CH_2-$, $-C(CH_3)_2-$, -C(=O)-, -S(=O)-, -O-, or $-SO_2-$; or
naphthalene substituted with a halogen element, hydrogen, a hydroxyl group, a carboxyl group, a straight or branched hydrocarbon group having 1 to 4 carbon atoms substituted or unsubstituted with a halogen element, or a combination thereof.

**11.** The binder of claim 1, wherein the polyamide polymer includes a monomer repeating unit represented by Formula 2 below,

[Formula 2]

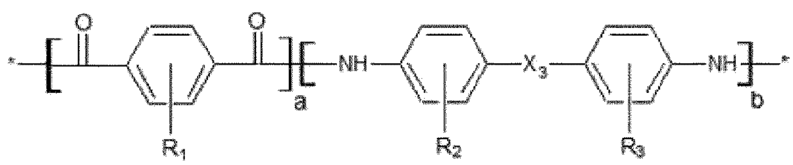

(1) (2)

wherein, in Formula 2 above,

$X_3$ is a simple bond, $-CH_2-$, $-C(CH_3)_2-$, -C(=O)-, -S(=O)-, -O-, or $-SO_2-$,
$R_1$ to $R_3$ are each independently a halogen element, hydrogen, a hydroxyl group, a carboxyl group, a straight or branched hydrocarbon group having 1 to 4 carbon atoms substituted or unsubstituted with a halogen element, or a combination thereof, and

a+b=1
(however, the halogen element in Formula 2 above does not include fluorine).

**12.** The binder of claim 1, wherein the polyamide polymer has a weight average molecular weight of 100,000 to 1,000,000.

**13.** The binder of claim 6, wherein a molar ratio of the terephthaloyl chloride to the isophthaloyl chloride (mol% of the terephthaloyl chloride: mol% of the isophthaloyl chloride) used in polymerization of the polyamide polymer is 2:8 to 8:2.

**14.** A positive electrode slurry, comprising:

the binder of any one of claims 1 to 13; and
a positive electrode active material.

**15.** A positive electrode, comprising:

a current collector; and
a positive electrode active material layer including the binder of any one of claims 1 to 13 formed on the current collector.

**16.** A secondary battery, comprising:
the positive electrode of claim 15.

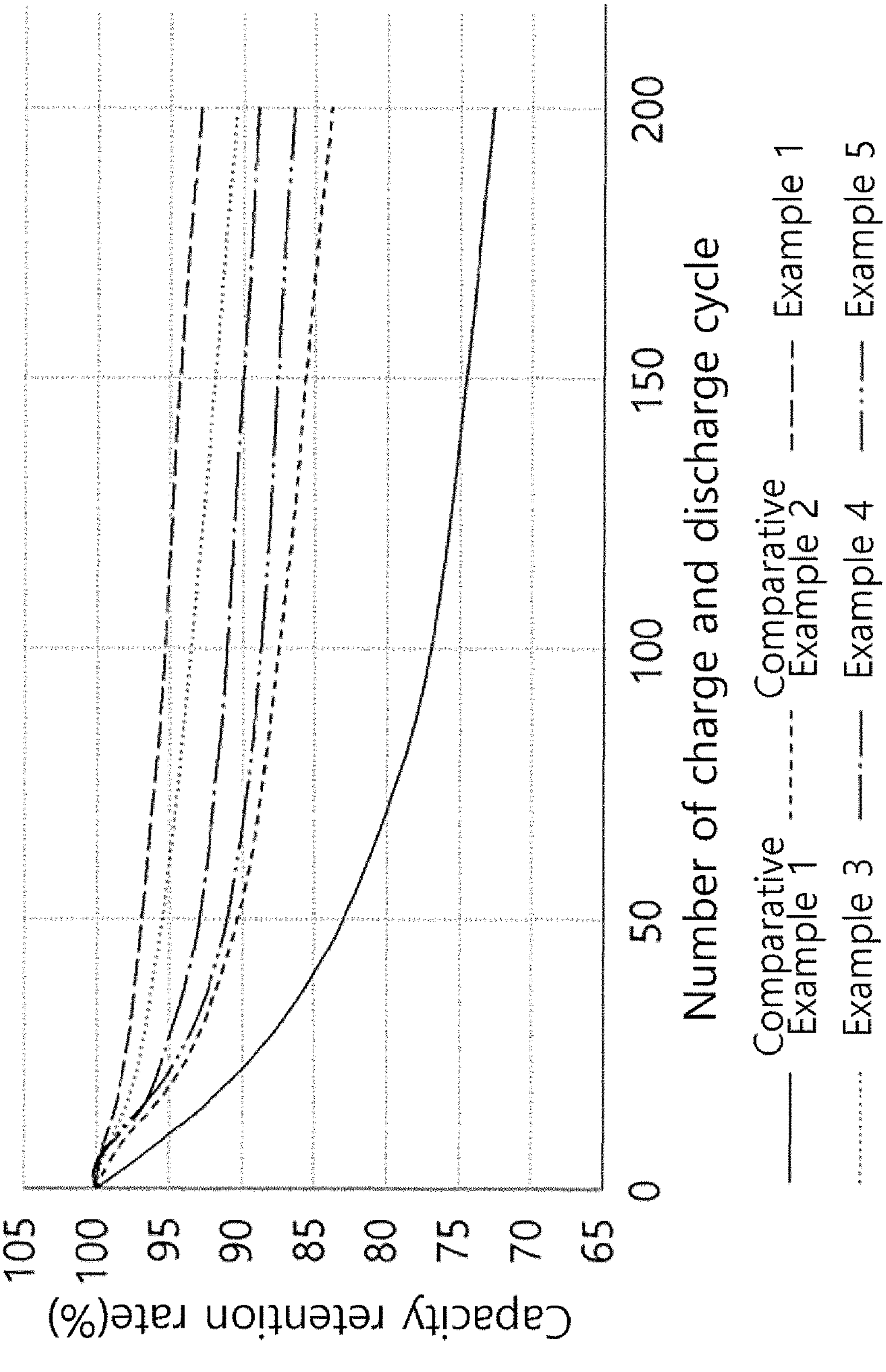

Capacity retention rate(%)
105
100
95
90
85
80
75
70
65
0
50
100
150
200
Number of charge and discharge cycle
Comparative Example 1
Comparative Example 2
Example 1
Example 3
Example 4
Example 5


Figure 1

## INTERNATIONAL SEARCH REPORT

International application No. **PCT/KR2023/017815**

**A. CLASSIFICATION OF SUBJECT MATTER**

**H01M 4/62**(2006.01)i; **H01M 4/131**(2010.01)i; **H01M 10/052**(2010.01)i; **C08L 77/06**(2006.01)i; **C08G 69/42**(2006.01)i; **C08G 69/32**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/62(2006.01); C08G 69/26(2006.01); C08G 69/32(2006.01); H01M 10/052(2010.01); H01M 2/16(2006.01); H01M 4/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 양극(positive electrode), 폴리아미드(polyamide), 유리전이온도(glass transition temperature), 바인더(binder), 방향족 환(aromatic ring), 이차전지(secondary battery)

**C. DOCUMENTS CONSIDERED TO BE RELEVANT**

| Category* | Citation of document, with indication, where appropriate, of the relevant passages | Relevant to claim No. |
|---|---|---|
| X | JP 2016-025058 A (NIPPON KAYAKU CO., LTD.) 08 February 2016 (2016-02-08) See claims 1, 3 and 6-8; and paragraphs [0014], [0015], [0023], [0033]-[0036], [0046] and [0047]. | 1-12,14-16 |
| Y | | 13 |
| Y | JP 2012-142244 A (TEIJIN TECHNO PRODUCTS LTD.) 26 July 2012 (2012-07-26) See paragraphs [0019], [0020] and [0049]; table 1; and examples 3-8. | 13 |
| X | JP 2011-124174 A (NIPPON KAYAKU CO., LTD.) 23 June 2011 (2011-06-23) See claims 1-6; and paragraphs [0013], [0014], [0022], [0031]-[0034] and [0036]. | 1-12,14-16 |
| Y | | 13 |
| A | JP 2015-060724 A (TORAY IND. INC.) 30 March 2015 (2015-03-30) See claims 1-3; and paragraphs [0017], [0018], [0020]-[0023], [0028] and [0035]. | 1-16 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 February 2024** | **16 February 2024** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

INTERNATIONAL SEARCH REPORT

International application No. **PCT/KR2023/017815**

**C. DOCUMENTS CONSIDERED TO BE RELEVANT**

| Category* | Citation of document, with indication, where appropriate, of the relevant passages | Relevant to claim No. |
|---|---|---|
| A | KR 10-2395841 B1 (IPI TECH INC) 09 May 2022 (2022-05-09)<br>See entire document. | 1-16 |

Form PCT/ISA/210 (second sheet) (July 2022)

**INTERNATIONAL SEARCH REPORT**
**Information on patent family members**

International application No.
**PCT/KR2023/017815**

| Patent document cited in search report | Publication date (day/month/year) | Patent family member(s) | Publication date (day/month/year) |
|---|---|---|---|
| JP 2016-025058 A | 08 February 2016 | TW 201622218 A | 16 June 2016 |
| | | WO 2016-013611 A1 | 28 January 2016 |
| JP 2012-142244 A | 26 July 2012 | JP 5670759 B2 | 18 February 2015 |
| JP 2011-124174 A | 23 June 2011 | JP 5500675 B2 | 21 May 2014 |
| JP 2015-060724 A | 30 March 2015 | JP 6273731 B2 | 07 February 2018 |
| KR 10-2395841 B1 | 09 May 2022 | WO 2023-054878 A1 | 06 April 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020160040125